# EUROPEAN PATENT APPLICATION

(11) **EP 2 723 060 A1**
(43) Date of publication of application: **23.04.2014**
(21) Application number: 12800299.5
(22) Date of filing: 18.05.2012
(51) Int. Cl.: H04N 5/225, B60R 1/00, H04N 5/232, H04N 5/243, H04N 7/18

(54) **VEHICLE-MOUNTED CAMERA DEVICE**

(30) Priority: 16.06.2011 JP 2011134465
(71) Applicant: Aisin Seiki Kabushiki Kaisha, Aichi 448-8650 (JP)
(72) Inventor: DONISHI, Yukiko, Kariya-shi, Aichi 448-8650 (JP); KATO, Naoki, Kariya-shi, Aichi 448-8650 (JP); ASANO, Tadashi, Kariya-shi, Aichi 448-8650 (JP)
(74) Representative: TBK
(86) International application number: PCT/JP2012/062845
(87) International publication number: WO 2012/172922

(57) **Abstract**

An in-vehicle camera apparatus having improved object visibility of a shaded area in a photographed image includes a shaded area calculation section for calculating a shaded area of interest in a photographed image based on luminance characteristics data of a generated photographed image, a luminance increase amount calculation section for calculating a luminance increase amount for the shaded area of interest, a luminance adjustment section for increasing the luminance of the photographed image based on the luminance increase amount, and a photographed image output section for outputting a luminance-adjusted photographed image adjusted by the luminance adjustment section to an in-vehicle image processing section.

## Description

### Technical Field

The present invention relates to an in-vehicle camera apparatus to be mounted on a vehicle for photographing the periphery area of the vehicle.

### Background Art

A photographed image acquired by such in-vehicle camera apparatus is displayed on a monitor in various forms for monitoring of the vehicle periphery area or for use in an object detection through such processing as an image recognition, etc.

For instance, Patent Document 1 discloses a luminance adjustment apparatus configured as follows. In order to supplement a blind spot for a driver at the time of parking, etc., a photographed image of an area rearwardly of the vehicle acquired by the in-vehicle camera apparatus will be displayed on a monitor disposed adjacent the driver. In this, for setting an appropriate luminance for the monitor, an optical sensor is provided at a rear portion of the vehicle for detecting the brightness of the area to be photographed by the camera. And, luminance of the monitor is adjusted based on brightness detected by this optical sensor. With use of such luminance adjustment apparatus, it is possible to calculate the optimal luminance of the whole photographed image. However, in the case of monitoring of vehicle periphery area, such luminance adjustment is not possible for appropriately adjusting the luminance of a locally limited photographed area included in a photographed image whose luminance differs on each photographic occasion, such as a photographed area of a moving object (a child, etc.) which is included in a shadow cast by a building, a tall tree, a vehicle, etc. Also, providing an an optical sensor for luminance adjustment increases costs required for this component as well as for its control.

According to an object detection apparatus disclosed in Patent Document 2, if a luminance value of a pixel constituting an area image for a preset predetermined area retrieved sequentially from an input image exceeds a set threshold value, the pixel luminance value is corrected so as not to exceed this threshold value. Then, the detection apparatus effects detection of an object, based on the luminance-corrected area image and a learning model. It is said that with the above-described arrangement, an object can be detected with high luminance even when the input image contains high luminance. The learning model uses, as learning images, photographed images of a pedestrian, a person riding on a bicycle, etc., for allowing detection of such objects. With this apparatus, however, for each of many small subareas divided from a photographed image, the luminance values of the pixels constituting this small sub-area are evaluated relative to the the threshold value and luminance adjustment is effected thereon. And, this process is effected in repetition. Therefore, the apparatus suffers significant calculation load for generating an image for use in the object detection.

### Prior Art Documents

### Patent Documents

Patent Document 1: Japanese Unexamined Patent Application No. 2010-208372 (paragraphs [0002-0037], Fig. 4)
Patent Document 2: Japanese Unexamined Patent Application No. 2007-272421 (paragraphs [0008-0038], Fig. 4)

### Summary of the Invention

### Problem to be Solved by Invention

In view of the above-described state of the art, there is a need for an in-vehicle camera apparatus capable of outputting a photographed image that allows effective checking of an area which is essential for vehicle periphery monitoring. For example, in vehicle periphery monitoring, a shaded area included in a shadow cast by a vehicle or the like has poor visibility, thus often being important in the monitoring. Hence, it is desired to improve the object visibility of such particular area of interest.

### Means for Achieving the Object

For achieving the above-noted object, according to an in-vehicle camera apparatus mounted in a vehicle for photographing a periphery area of the vehicle, proposed by the present invention, luminance adjustment of the whole photographed image is effected based on luminance characteristics data of a subarea which is an area in a generated photographed image excluding the vehicle. Here, the term "luminance characteristics data" refers to characteristics data relating to luminance and this is meant to include simple group of data of luminance values in the unit of pixel, as well as statistical values in the form of e.g. a luminance histogram, a luminance area distribution, etc.

With the above-described arrangement, the whole photographed image is luminance-adjusted, based on the luminance characteristics data of a subarea in the photographed image, excluding the area including the vehicle, which is not the periphery area of the vehicle. As a result, it is possible to eliminate the influence from a vehicle portion, such as a bumper, to the luminance of the photographed image.

More particularly, the in-vehicle camera apparatus according to the present invention, comprises a shaded area calculation section for calculating a shaded area of interest in the photographed image as the subarea, based on the luminance characteristics data of the photographed image; a luminance increase amount calculation section for calculating a luminance increase amount for the shaded area of interest; a luminance adjustment section for increasing the luminance of the photographed image based on the luminance increase amount; and a photographed image output section for outputting a luminance-adjusted photographed image adjusted by the luminance adjustment section to an in-vehicle camera image processing section.

With the above-described arrangement, from a photographed image, luminance characteristics data, e.g. a luminance histogram, a luminance area distribution, etc. is produced; and then, based on this luminance characteristics data, a shaded area of interest, which is important for vehicle periphery monitoring, in the photographed image, is calculated. Further, a luminance increase amount for increasing the luminance of this shaded area of interest, is calculated only for the calculated shaded area of interest. Thereafter, based on this luminance increase amount, luminance adjustment for increasing the luminance of the photographed image is effected. In this, the term "luminance increase amount" is used herein to be inclusive of not only simple increase of luminance of photographed image, but also of increasing of a dynamic range of the luminance of the photographed image, in this shaded area of interest. Accordingly, this term can be referred to also as "a luminance level adjustment amount". The resultant photographed image after such luminance adjustment will be of a low quality in the sense of ordinary photographed image due to occurrence of blown-out highlights therein, such as the sky, an illumination light, etc., but this is an image advantageous for better visibility of a moving body such as a child which is present in the shadow of a building, a big tree, a vehicle, etc. Therefore, when this luminance-adjusted photographed image is displayed on a monitor, the driver can readily recognize the moving body such as a child which is present in the shadow of a building, a big tree, a vehicle, etc. And, the image recognition using this luminance-adjusted photographed image facilitates recognition of such moving object.

Moreover, since a shaded area of interest is calculated and then based on a luminance increase amount calculated from the luminance values of this shaded area of interest, the whole photographed image is luminance-adjusted, it is possible to eliminate visual unnaturalness at the border of the shaded area of interest which unnaturalness would otherwise occur if the luminance adjustment is done only for the shaded area of interest. Consequently, a photographed image providing a sense of unity as a whole can be obtained. In this case, even when blown-out highlights occur in highlight areas such as areas of the sky, illumination, such blown-out highlights will be hardly problematic in the image for vehicle periphery monitoring.

According to one preferred embodiment of the present invention, the camera apparatus further comprises a luminance characteristics data generation section for generating segment luminance characteristics data of each of a plurality of segments which together constitute the photographed image; and based on this segment luminance characteristics data, the shaded area calculation section calculates a shaded area due to an object present in the periphery area as the shaded area of interest. A shaded area of interest is an area wherein there is high possibility of presence of an object which may be an obstacle for vehicle travel due to poor visibility resulting from its presence in a shadow of a certain object. The accuracy of finding such shaded area of interest from a photographed image is higher when the photographed image is divided into a plurality of segments.

Even when the luminance increase amount for the shaded area of interest is calculated, if this same luminance increase amount were applied to the area other than the shaded area of interest, this may present inconvenience, depending on the luminance characteristics of the area other than the shaded area of interest. In order to solve this, a certain degree of freedom should be provided in the luminance adjustment based on the luminance increase amount. To this end, according to one preferred embodiment of the present invention, the camera apparatus further comprises a luminance adjustment curve setting section for selecting a luminance adjustment curve based on the luminance increase amount; and the luminance adjustment section increases the luminance of the photographed image with using a selected luminance adjustment curve.

For the calculation of a shaded area of interest, empirically obtained knowledge is important. To this end, a learning type calculating unit will be suitable. Therefore, according to one preferred embodiment of the present invention, the shaded area calculation section is constructed by learning in advance to calculate the shaded area of interest with using the luminance characteristics data as input parameter.

### Brief Description of the Drawings

[Fig.1] is a diagram illustrating a process in which a shade area of interest in a photographed image of vehicle periphery area is calculated and luminance adjustment is effected to this photographed image so as to appropriately increase the luminance of this shaded area of interest,
[Fig. 2] is an explanatory view explaining one example of luminance characteristics data,
[Fig. 3] is an explanatory view explaining one example of luminance characteristics data,
[Fig. 4] is a functional block diagram of a luminance adjustment function according to one preferred embodiment of an in-vehicle camera apparatus relating to the present invention, and
[Fig. 5] is a flowchart illustrating the flow of luminance adjustment in the in-vehicle camera apparatus shown in Fig. 4.

### Modes of Embodying the Invention

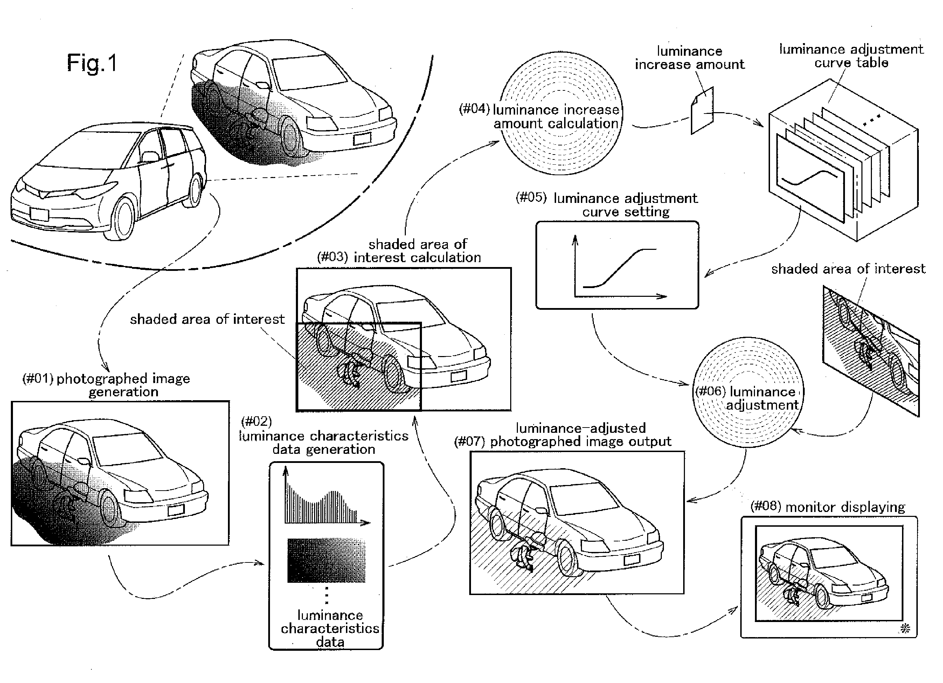

Before explaining a specific embodiment of an in-vehicle camera apparatus relating to the present invention, with reference to Fig. 1, the basic principle of luminance adjustment effected in this in-vehicle camera apparatus will be schematically explained. According to the basic concept of the in-vehicle camera apparatus of the present invention, luminance adjustment of a whole photographed image is effected based on luminance characteristics data of a subarea in the photographed image, the subarea being the area in the generated photographed image of the vehicle periphery excluding the vehicle. For instance, pixel values (luminance values) of the "pure" vehicle periphery area in the photographed image, excluding components of the self vehicle such as a bumper are employed for making brighter a shaded area in the vehicle periphery shaded by a shadow or the like. With this, the visibility of the vehicle periphery image displayed on a monitor is improved.

Incidentally, the luminance adjustment according to the present invention includes an arrangement for obtaining a photographed image having higher luminance shaded area therein by effecting luminance adjustment (exposure adjustment) in a wider convergence range than the usual range (e.g. the case of a human being the photographic subject) in an automatic luminance adjustment. With this arrangement of obtaining a photographed image having brighter shaded area therein, an object in the shadow will appear more distinct against the background, thus facilitating visual recognition of this object present in the shadow. The image provides also better visibility of the photographic subject such as leaves of a tree. That is, the camera apparatus is suitable as a vehicle periphery monitoring camera for ensuring safety in the periphery.

According to the inventive basic concept illustrated by the following schematization, luminance of a whole photographed image is increased, based on luminance characteristics data of a particular shaded area of interest in the photographed image.

A photographed image is produced by a camera section of the in-vehicle camera apparatus (#01). This camera section includes such conventional components as a white-balance circuit, a γ-correction section, etc., and the produced photographed image, more particularly, a digital photographed image, is an image having a standard quality level. That is, in this photographed image, a highlight area, a shaded area and an intermediate area are present in balanced proportion with respect to each other, and blown-out highlights are effectively restricted in the highlight area and blocked-out shadows are effectively restricted in the shaded area.

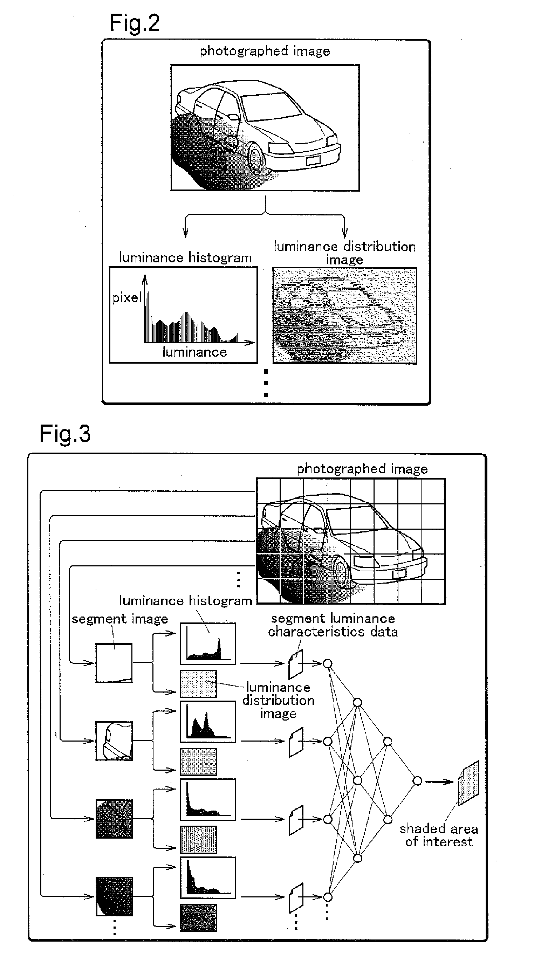

The produced photographed image has luminance values in the unit of pixel. Then, with using these pixel-unit luminance values, luminance characteristics data are generated (#02). As some non-limiting examples of the luminance characteristics data, there can be cited a luminance histogram and a luminance distribution image as shown in Fig. 2 and Fig. 3 respectively. A luminance histogram, as is well-known, shows distribution of luminance values of an image (degrees of brightness/darkness), with the horizontal axis representing the luminance, the vertical axis representing the numbers of pixels. From this luminance characteristics data, it is possible to detect the occupancy of the shaded area or the highlight area in the photographed image. Whereas, a luminance distribution image shows luminance distribution in predetermined luminance gray scale in a two-dimensional coordinate plane equivalent to a photographed image. This luminance gradation may not be linear, but may be non-linear with showing the shaded area important for the invention in higher gray scale. As a digitized photographed image per se is a kind of luminance distribution image, the photographed image per se or its mosaic image can be provided as a luminance distribution image. Based on such luminance characteristics data, of an object present on the road surface, an area thereof darkened by a shadow will be calculated and determined as a shaded area of interest. In this, as the center of photography by the in-vehicle camera is substantially fixed, it is likely that the upper half of the photographed image will be a bright area (highlight area) such as the sky and the lower half of the photographed image will be a dark area (shaded area) affected by a shade. Taking this into consideration, it is also possible to set the lower half of a photographed image as a shaded area of interest.

Further, visibility evaluation may be effected on a photographed image based on human sensing, and a visibility evaluation image may be produced as luminance characteristics data, and an area which is a shaded area and has poor visibility may be calculated and determined as a vehicle area of interest.

For more accurate calculation of shaded area of interest, however, a learning control such as a neural network may be employed. For instance, many typical photographed images will be acquired in advance and a shaded area to be of interest in each photographed image will be determined. Then, combination of the shaded area thus obtained and the luminance characteristics data of its photographed image will be used as "teacher information". And, a calculation module will be configured to obtain an output for identifying the shaded area with input of the luminance characteristics data of an inputted photographed image.

Further, this luminance characteristics data may be divided into a mode wherein the data are generated for the whole photographed image as shown in Fig. 2 and luminance characteristics data for each segment, namely, segment luminance characteristics data, obtained by dividing the photographed image into a plurality of segments, as shown in Fig. 3. For a particular type of luminance characteristics data, with such segmentation, the data can be made more effective for the calculation of the shaded area of interest. For instance, from a segment luminance histogram, it is readily possible to identify the position of a shaded area with blocked-out shadows occurring therein in the photographed image.

From the generated luminance characteristics data, a shaded area having the possibility of presence of an object on or adjacent a road surface darkened by a shadow is calculated as a shaded area of interest (#03). According one very simple algorithm for calculation of shaded area of interest, a dark area near a road surface having its upper side delimited by a bright area will be calculated and determined as a shaded area of interest.

After the above-described calculation of a shaded area of interest, based on luminance values of pixels included in the shaded area of interest, and with using also, if needed, luminance values or an average luminance value of pixels included in the area other than the shaded area of interest, the process calculates a luminance increase amount for making the shaded area of interest brighter for improvement of the visibility or recognizability of the shaded area of interest (#04).

Subsequently, the process effects a luminance adjustment for increasing the luminance of the photographed image, based on the calculated luminance increase amount. This luminance adjustment of the photographed image is effected by using generally a luminance adjustment (correction) curve as is well-known. Although this luminance adjustment curve may be linear (that is a straight line), in general, an S-curve is employed. Through this luminance adjustment, an increase of luminance by a degree substantially corresponding to the calculated luminance increase amount is realized in the shaded area of interest. In some cases, advantageously, the shape of the luminance adjustment curve, that is, the degree of luminance amount for the whole photographed image, should be changed, depending on the vehicle area of interest or the luminance distribution of the photographed image. For this reason, it will be advantageous to employ an arrangement of storing a plurality of luminance adjustment curves in advance for allowing appropriately selection therefrom. In this case of such arrangement, firstly, an optimal luminance adjustment curve is selected and set (#05), then, with using this luminance adjustment curve, luminance adjustment of the photographed image is effected (#06). Incidentally, this luminance adjustment curve may be prepared in the form of a table (mapped) for computer processing or may be configured by a calculation method by a calculation formula. In this regard, the term "luminance adjustment curve" is used herein as a generic term inclusive of all of such forms.

The resultant, luminance-adjusted photographed image is outputted to a photographed image displaying module 5 for inputting the photographed image and causing a monitor (an in-vehicle monitor 51) to display it as a periphery monitoring image or to an image recognition module 6 for recognizing e.g. a traveling obstacle such as another vehicle, a pedestrian, etc. from the photographed image (#07). The photographed image sent to the photographed image displaying module 5 will be displayed on the monitor (#08).

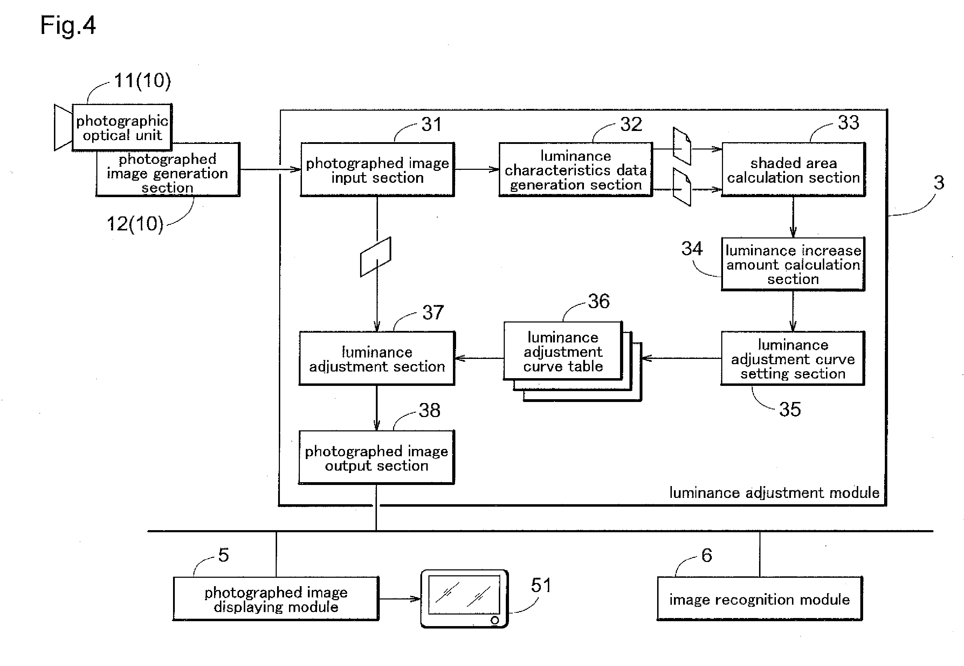

Next, there will be explained a specific embodiment of an in-vehicle camera apparatus of this invention applying the above-described basic concept of luminance adjustment. This in-vehicle camera apparatus is to be incorporated in e.g. a parking assist system or a periphery view monitoring system, to be mounted on a vehicle. Fig. 4 shows a functional block diagram of this in-vehicle camera apparatus. The most pertinent functional component for the present invention is a luminance adjustment module 3. The in-vehicle camera apparatus includes, as a functional section for acquiring a photographed image, a camera body 10 consisting of a photographic optical unit 11, a photographed image generation section 12, etc. The photographic optical unit 11 includes such optical components as a lens, an aperture stop, a shutter, etc. The photographed image generation section 12 includes such photographic elements as a CCD, a CMOS, etc. A luminance-adjusted photographed image outputted from the in-vehicle camera apparatus is transmitted to the photographed image displaying module 5 for generating a displaying image for the in-vehicle monitor 51 and/or the image recognition module 6 for detecting an obstacle, a road signpost, a parking lot delimiting line, etc. present in the vehicle periphery. Incidentally, a photographed image transmitted to the photographed image displaying module 5 and a photographed image transmitted to the image recognition module 6 may employ different luminance adjustment methods for use in the luminance adjustment module 3. However, the basic principle thereof will be the one illustrated in Fig. 1.

The various functions included in the luminance adjustment module 3 will substantially be realized by starting of a program stored in a computer system and function in cooperation with the hardware of this computer system. The luminance adjustment module 3 used in this embodiment includes, as functional sections especially pertinent to the present invention, a photographed image input section 31, a luminance characteristics data generation section 32, a shaded area calculation section 33, a luminance increase amount calculation section 34, a luminance adjustment curve setting section 35, a luminance adjustment curve table 36, a luminance adjustment section 37 and a photographed image output section 38.

The photographed image input section 31 temporarily maps a photographed image transmitted from the photographed image generation section 12 in a memory. Then, the luminance characteristics data generation section 32 generates luminance characteristics data such as a luminance histogram, a luminance distribution image, from the photographed image mapped in the memory. In the instant embodiment, the luminance characteristics data generation section 32 has a function of dividing a photographed image into a plurality of segments and generating luminance characteristics data from each segment. Advantageously, this segmentation will be effected such that an area having the possibility of presence of image of the sky and an area having the possibility of presence of image of a road surface are formed distinct from each other. For, the area important for this luminance adjustment module 3 is an area which is darkened by a shadow of an object adjacent the road surface, so as clear as possible distinction between the sky area and the road surface area is preferred.

The shaded area calculation section 33 calculates a shaded area of interest based on a predetermined rule (condition), with using the luminance characteristics data generated by the luminance characteristics data generation section 32 as input parameters. This shaded area of interest is an area which is important for the peripheral image for vehicle periphery monitoring and which will appear darkened by a shadow cast by a vehicle, a building, etc. in a normal photographed image. Although it is possible to employ a simple algorithm which determines an area in the lower half of a photographed image and appearing darker than the surrounding area as the shaded area of interest, the calculation accuracy can be improved by using a calculation section constructed with using a learning scheme such as neural network.

The luminance increase amount calculation section 34 calculates a luminance increase amount which will restrict to some extent occurrence of blocked-out shadows in the shaded area of interest, with using the luminance data of the calculated shaded area of interest, e.g. a luminance average value, a luminance intermediate value, etc. In this, it is also possible to employ an arrangement which takes into consideration luminance values of the area other than the shaded area of interest.

In the instant embodiment, a plurality of luminance adjustment curves for use in adjustment of the luminance of a photographed image as a whole based on the luminance increase amount are stored in the luminance adjustment curve table 36. Therefore, the luminance adjustment curve setting section 35 selects the optimal luminance adjustment curve from the luminance adjustment curve table 36 based on the luminance increase amount and the luminance characteristics data of the photographed image, etc. A selected luminance adjustment curve will then be set in the luminance adjustment section 37, so that the luminance adjustment section 37 uses this set luminance adjustment curve to carry out luminance adjustment of the photographed image. The photographed image output section 38 outputs the resultant luminance-adjusted photographed image to the photographed image displaying module 5 and/or the image recognition module 6.

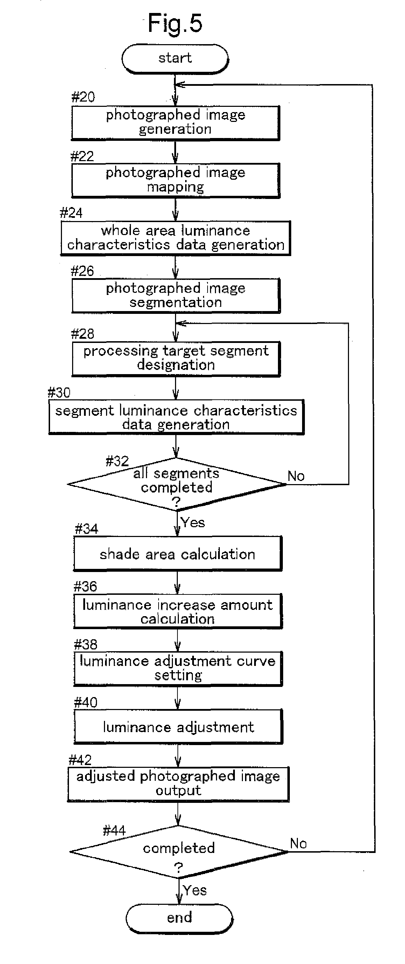

Next, with reference to the flowchart shown in Fig. 5, there will be explained one example of photographed image luminance adjustment operation by the in-vehicle camera apparatus configured as above.

Upon start of a vehicle periphery monitoring process using a photographed image obtained by this in-vehicle camera apparatus, the camera body 10 generates a photographed image (#20) and maps this image in the memory of the luminance adjustment module 3 (#22). Firstly, for this photographed image mapped in the memory, whole luminance characteristics data obtained from the entirety of the image is generated by the luminance characteristics data generation section 32 (#24). Further, this photographed image is divided into a plurality of segments (#26). As processing target segments are designated one after another from the divided segments (#28), the luminance characteristics data of the segments are generated (#30). This luminance characteristics data generation process for each segment is effected in repetition for the processing target segments designated one after another (NO branching at #32). After generation of luminance characteristics data of all the segments (YES branching at #32), with using the whole luminance characteristics data and the segment luminance characteristics data as input parameters, a shaded area of interest is calculated by the shaded area calculation section 33 (#34). Further, based on the luminance of the shaded area of interest, a luminance increase amount required for making the image of this shaded area of interest brighter is calculated by the luminance increase calculation section 34 (#36). After a luminance adjustment curve is set based on the calculated luminance increase amount (#38), the luminance adjustment section 37 effects luminance adjustment on the photographed image (#40). The resultant, luminance-adjusted photographed image is outputted via the photographed image output section 38 (#42). The series of processing steps above are carried out in repetition until the vehicle periphery monitoring process is completed (YES branching at #44).

### [Other Embodiments]

(1) In the foregoing embodiment, in the vehicle periphery monitoring process shown in Fig. 5, the luminance increase amount is calculated for each occasion of acquisition of a photographed image. However, the luminance increase amount need not always be calculated for each occasion. Instead, the luminance increase amount can be calculated by a predetermined time interval or predetermined image number interval or for each occasion of photographic scene change. With this, for many photographed images, the luminance adjustment will be effected with using a previously used luminance adjustment curve. As a result, the calculation load for luminance adjustment can be reduced advantageously.
(2) In the foregoing embodiment, for the sake of easier understanding of the luminance adjustment process of a photographed image, the construction of the luminance adjustment module 3 was divided into many small blocks for the respective functions. It is understood however that these functional blocks are provided only for the sake of explanation and the present invention is not limited to such block construction. As long as the described functions are realized, the functional blocks can be modified in many forms. For instance, in the case of an arrangement wherein upon calculation of a luminance increase amount, a luminance adjustment curve is automatically set based on this luminance increase amount, the luminance adjustment curve setting section 35 will become unnecessary.
(3) In the foregoing embodiment, as luminance characteristics data, there was employed a luminance histogram involving statistical calculations. If there is employed, instead, a simple arrangement wherein a luminance value blow a predetermined value is calculated as a shaded area of interest, the luminance characteristics data generation section 32 and the shaded area calculation section 33 will be integrated with each other.

### Industrial Applicability

The present invention may be used in any system which effects monitoring of a vehicle periphery with using a photographed image.

### Description of Reference Marks

10: camera body
12: photographed image generation section
3: luminance adjustment module
31: photographed image input section
32: luminance characteristics data generation section
33: shaded area calculation section
34: luminance increase amount calculation section
35: luminance adjustment curve setting section
36: luminance adjustment curve table
37: luminance adjustment section
38: photographed image output section

## Claims

1. An in-vehicle camera apparatus mounted in a vehicle for photographing a periphery area of the vehicle,
wherein luminance adjustment of the whole photographed image is effected based on luminance characteristics data of a subarea which is an area in a generated photographed image excluding the vehicle.

2. The in-vehicle camera apparatus according to claim 1, comprising:
a shaded area calculation section for calculating a shaded area of interest in the photographed image as the subarea, based on the luminance characteristics data of the photographed image;
a luminance increase amount calculation section for calculating a luminance increase amount for the shaded area of interest;
a luminance adjustment section for increasing the luminance of the photographed image based on the luminance increase amount; and
a photographed image output section for outputting a luminance-adjusted photographed image adjusted by the luminance adjustment section to an in-vehicle camera image processing section.

3. The in-vehicle camera apparatus according to claim 2, wherein the camera apparatus further comprises a luminance characteristics data generation section for generating segment luminance characteristics data of each of a plurality of segments which together constitute the photographed image; and based on this segment luminance characteristics data, the shaded area calculation section calculates a shaded area due to an object present in the periphery area as the shaded area of interest.

4. The in-vehicle camera apparatus according to claim 2 or 3, wherein the camera apparatus further comprises a luminance adjustment curve setting section for selecting a luminance adjustment curve based on the luminance increase amount; and the luminance adjustment section increases the luminance of the photographed image with using a selected luminance adjustment curve.

5. The in-vehicle camera apparatus according to claim 2 or 3, wherein the camera apparatus further comprises a luminance adjustment curve setting section for selecting a luminance adjustment curve based on the luminance increase amount and the luminance characteristics data; and the luminance adjustment section increases the luminance of the photographed image with using a selected luminance adjustment curve.

6. The in-vehicle camera apparatus according to any one of claims 2-5, wherein the shaded area calculation section comprises a learning type calculation unit constructed by learning in advance to calculate the shaded area of interest with using the luminance characteristics data as input parameter.

## Amended claims

### Amended claims under Art. 19.1 PCT

**1.** (Currently amended) An in-vehicle camera apparatus mounted in a vehicle for photographing a periphery area of the vehicle, comprising:
a shaded area calculation section for calculating a shaded area of interest which is a partial area in a generated photographed image excluding the vehicle in the photographed image, based on the luminance characteristics data of the photographed image;
a luminance increase amount calculation section for calculating a luminance increase amount for the shaded area of interest;
a luminance adjustment section for increasing the luminance of the photographed image based on the luminance increase amount; and
a photographed image output section for outputting a luminance-adjusted photographed image adjusted entirely by the luminance adjustment section to an in-vehicle camera image processing section;
wherein the shaded area calculation section comprises a learning type calculation unit constructed by learning in advance to calculate the shaded area of interest with using the luminance characteristics data as input parameter.

**2.** (Currently cancelled).

**3.** (Currently amended) The in-vehicle camera apparatus according to claim 1, wherein the camera apparatus further comprises a luminance characteristics data generation section for generating segment luminance characteristics data of each of a plurality of segments which together constitute the photographed image; and based on this segment luminance characteristics data, the shaded area calculation section calculates a shaded area due to an object present in the periphery area as the shaded area of interest.

**4.** (Currently amended) The in-vehicle camera apparatus according to claim 1 or 3, wherein the camera apparatus further comprises a luminance adjustment curve setting section for selecting a luminance adjustment curve based on the luminance increase amount; and the luminance adjustment section increases the luminance of the photographed image with using a selected luminance adjustment curve.

**5.** (Currently amended) The in-vehicle camera apparatus according to claim 1 or 3, wherein the camera apparatus further comprises a luminance adjustment curve setting section for selecting a luminance adjustment curve based on the luminance increase amount and the luminance characteristics data; and the luminance adjustment section increases the luminance of the photographed image with using a selected luminance adjustment curve.

**6.** (Currently canceled).
